# EUROPEAN PATENT APPLICATION

(11) **EP 4 814 635 A1**
(43) Date of publication of application: **30.09.2026**
(21) Application number: 24893998.5
(22) Date of filing: 06.11.2024
(51) Int. Cl.: G05B 19/418, G05B 23/02

(54) **MONITORING DEVICE, MONITORING METHOD AND MONITORING PROGRAM**

(30) Priority: 22.11.2023 JP 2023198404
(71) Applicant: OMRON Corporation, Kyoto-shi, Kyoto 600-8530 (JP)
(72) Inventor: FURUKAWA, Motohisa, Kyoto-shi, Kyoto 600-8530 (JP); YACHIKU, Hideki, Kyoto-shi, Kyoto 600-8530 (JP); KOZAWA, Akiko, Kyoto-shi, Kyoto 600-8530 (JP); TANI, Yoshiyuki, Kyoto-shi, Kyoto 600-8530 (JP)
(74) Representative: Mewburn Ellis LLP
(86) International application number: PCT/JP2024/039447
(87) International publication number: WO 2025/110006

(57) **Abstract**

A monitoring apparatus includes: an anomaly calculation unit configured to calculate an anomaly based on condition data of each machine of a plurality of machines; a priority determination unit configured to determine priority for the plurality of machines based on the anomaly calculated by the anomaly calculation unit; and a display control unit configured to display information regarding the plurality of machines according to the priority determined by the priority determination unit.

## Description

### TECHNICAL FIELD

The present disclosure relates to a monitoring apparatus, a monitoring method, and a monitoring program for monitoring conditions of multiple machines.

### BACKGROUND ART

Conventionally, a monitoring system for monitoring multiple machines, when analyzing fault details upon occurrence of an alarm, is required to quickly grasp failure details by utilizing actual operation data and history data of the machines.

In this regard, Japanese Patent Laying-Open No. 2018-5833 (PTL 1) proposes a method in which data regarding manufacturer's machines installed in a factory are centrally collected and stored on a monitoring apparatus side at predetermined intervals to be monitored.

### CITATION LIST

### PATENT LITERATURE

PTL 1: Japanese Patent Laying-Open No. 2018-5833

### SUMMARY OF INVENTION

### TECHNICAL PROBLEM

Meanwhile, even though the monitoring apparatus centrally collects data regarding multiple machines, it is unclear as to which machine should be addressed with priority.

The present disclosure is made to solve the above problem, and an object of the present disclosure is to provide a monitoring apparatus, a monitoring method, and a monitoring program capable of more efficiently monitoring conditions of multiple machines.

### SOLUTION TO PROBLEM

A monitoring apparatus according to an example of the present disclosure includes: an anomaly calculation unit configured to calculate an anomaly based on condition data of each machine of a plurality of machines; a priority determination unit configured to determine priority for the plurality of machines based on the anomaly calculated by the anomaly calculation unit; and a display control unit configured to display information regarding the plurality of machines according to the priority determined by the priority determination unit. According to this configuration, the priority for the plurality of machines is determined based on the anomaly, and the information regarding the plurality of machines is displayed according to the determined priority. Thus, the conditions of the plurality of machines can be efficiently monitored.

The condition data includes a plurality of pieces of variable data. The anomaly calculation unit calculates an anomaly based on a Mahalanobis distance of the plurality of pieces of variable data. According to this configuration, the priority for the plurality of machines is determined based on the anomaly based on the Mahalanobis distance, and the information regarding the plurality of machines is displayed according to the determined priority. Thus, the conditions of the plurality of machines can be efficiently monitored.

The monitoring apparatus further includes: a contribution rate calculation unit configured to calculate a contribution rate of each variable data to the anomaly; and an anomaly estimation unit configured to estimate an anomaly according to the calculated contribution rate. According to this configuration, the contribution rate to the anomaly is calculated, and the anomaly is estimated according to the calculated contribution rate. Thus, the conditions of the plurality of machines can be efficiently monitored.

The monitoring apparatus further includes a maintenance proposal unit configured to guide information regarding maintenance according to the estimated anomaly. According to this configuration, the information regarding maintenance is guided according to the anomaly. Thus, the conditions of the plurality of machines can be efficiently monitored.

The priority determination unit determines the priority for the plurality of machines based on the calculated anomaly and maintenance-related information respectively corresponding to the plurality of machines. According to this configuration, the priority for the plurality of machines is determined based on the anomaly and the maintenance-related information, and the information regarding the plurality of machines is displayed according to the determined priority. Thus, the conditions of the plurality of machines can be efficiently monitored.

The maintenance-related information includes at least one information among a maintenance history, maintenance personnel, availability information for maintenance parts, and a maintenance area. According to this configuration, by including at least one information among the maintenance history, the maintenance personnel, the availability information for maintenance parts, and the maintenance area as the maintenance-related information, the conditions of the plurality of machines can be efficiently monitored.

The priority determination unit calculates a difference value between the anomaly and a reference threshold, and determines the priority for the plurality of machines based on a calculated difference value. According to this configuration, the priority for the plurality of machines is determined based on the difference value between the anomaly and the reference threshold, and the information regarding the plurality of machines is displayed according to the determined priority. Thus, the conditions of the plurality of machines can be efficiently monitored.

The reference threshold is settable and changeable corresponding to each machine of the plurality of machines. According to this configuration, since the threshold is provided so as to be settable and changeable, the threshold is adjustable according to characteristics of individual machines.

A monitoring method according to an example of the present disclosure includes: a step of calculating an anomaly based on condition data of each machine of a plurality of machines; a step of determining priority for the plurality of machines based on the calculated anomaly; and a step of displaying information regarding the plurality of machines according to a determined priority. According to this configuration, the priority for the plurality of machines is determined based on the anomaly, and the information regarding the plurality of machines is displayed according to the determined priority. Thus, the conditions of the plurality of machines can be efficiently monitored.

A monitoring program according to an example of the present disclosure is a monitoring program for causing a computer to execute a monitoring method, the program causing the computer to execute: a step of calculating an anomaly based on condition data of each machine of a plurality of machines; a step of determining priority for the plurality of machines based on the calculated anomaly; and a step of displaying information regarding the plurality of machines according to the determined priority. According to this configuration, the priority for the plurality of machines is determined based on the anomaly, and the information regarding the plurality of machines is displayed according to the determined priority. Thus, the conditions of the plurality of machines can be efficiently monitored.

### ADVANTAGEOUS EFFECTS OF INVENTION

According to the monitoring apparatus, the monitoring method, and the monitoring program of the present disclosure, the conditions of the plurality of machines can be more efficiently monitored.

### BRIEF DESCRIPTION OF DRAWINGS

Fig. 1 is a diagram illustrating a configuration of a monitoring system 1 according to Embodiment 1.
Fig. 2 is a diagram illustrating a configuration of a data collection device 10 according to Embodiment 1.
Fig. 3 is a diagram illustrating a configuration of a monitoring apparatus 100 according to Embodiment 1.
Fig. 4 is a diagram illustrating functional blocks of the monitoring system according to Embodiment 1.
Fig. 5 is a diagram illustrating condition data acquired by a device data acquisition unit 22 according to Embodiment 1.
Fig. 6 is a diagram illustrating a calculation process of an anomaly calculation unit 20 according to Embodiment 1.
Fig. 7 is another diagram illustrating an anomaly in anomaly calculation unit 20 according to Embodiment 1.
Fig. 8 is a diagram illustrating a process of monitoring apparatus 100 according to Embodiment 1.
Fig. 9 is a diagram illustrating an example of a monitoring screen displayed on a display device 70 according to Embodiment 1.
Fig. 10 is a diagram illustrating functional blocks of a monitoring system according to Embodiment 2.
Fig. 11 is a diagram illustrating contribution rates of multiple variables calculated by a contribution rate calculation unit 206 according to Embodiment 2.
Fig. 12 is a diagram illustrating presentation of information regarding maintenance in a maintenance proposal unit 209 according to Embodiment 2.
Fig. 13 is a diagram illustrating an example of a monitoring screen displayed on a display device 70 according to Embodiment 3.
Fig. 14 is a diagram illustrating an example of a monitoring screen displayed on a display device 70 according to Embodiment 4.

### DESCRIPTION OF EMBODIMENTS

Embodiments according to the present invention will be described in detail with reference to the accompanying drawings. Note that like or corresponding parts in the drawings are denoted by the same reference numerals, and description thereof will not be repeated.

### (Embodiment 1)

### (Overall Configuration)

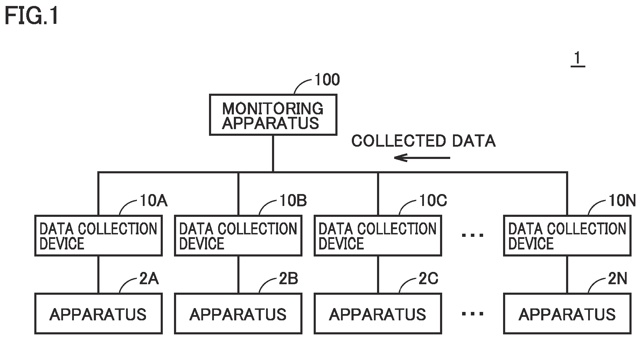

A configuration of a monitoring system 1 according to Embodiment 1 is now described. Fig. 1 is a diagram illustrating a configuration of a monitoring system 1 according to Embodiment 1. Referring to Fig. 1, monitoring system 1 includes multiple apparatuses 2A to 2N, data collection devices 10A to 10N (hereinafter, also collectively referred to as a data collection device 10) provided corresponding to respective apparatuses 2A to 2N (hereinafter, also collectively referred to as an apparatus 2), and a monitoring apparatus 100.

Apparatuses 2A to 2N are, as an example, apparatuses for manufacturing some product, assembly apparatuses, or the like, and may be configured of one mechanism or multiple mechanisms. Note that, as an example, apparatuses 2A to 2N do not need to be the same apparatus and may be apparatuses of different types. Data collection device 10 collects condition data of apparatus 2. The condition data may include any type of data related to a condition of each mechanism constituting apparatus 2. Each mechanism may be configured of, for example, at least any one of a conveyor, a robot arm, a servo motor, a cylinder (such as a molding machine), a suction pad, a cutter device, and a sealing device, or a part of such a device. Each mechanism may include, in addition to a device involving some physical operation as described above, for example, a device for sensing some information using various sensors, a device for acquiring data from various sensors, a device for sensing some information from acquired data, and a device for performing internal processing such as a device for performing information processing on acquired data.

As a specific example, if apparatus 2 is an injection molding machine by way of example, data collection device 10 may collect condition data from a temperature sensor for sensing a heater temperature, a pressure sensor for sensing an injection pressure, a pressure sensor for sensing a resin pressure, a pressure sensor for sensing a pump pressure, and a temperature sensor for sensing a mold temperature. Note that the condition data may be, for example, data indicating at least any one of torque, speed, acceleration, temperature, current, voltage, pneumatic pressure, pressure, flow rate, position, dimensions (height, length, width), and area. Such condition data can be obtained by at least any one measurement device such as a known sensor and a camera. For example, the flow rate can be obtained by a flow sensor. Moreover, the position, dimensions, and area can be obtained by an image sensor. Moreover, the condition data may be data input to each mechanism, such as an input command value and a control value when indicating the condition of each mechanism. Note that the condition data may be composed of data obtained from one or multiple measurement devices. Moreover, the condition data may be data obtained from a measurement device as is, or may be data obtainable by applying some processing to data obtained from a measurement device, such as position data acquired from image data. In this example, the data collection device 10 is provided corresponding to one apparatus 2 will be described. However, the present invention is not limited such a configuration. A method may be adopted in which multiple apparatuses 2 are connected to data collection device 10 and the condition data is collected.

Data collection devices 10A to 10N collect condition data from apparatuses 2A to 2N, and output collection results to monitoring apparatus 100. Data collection devices 10A to 10N collect the condition data from apparatuses 2A to 2N, calculate anomalies of respective apparatuses 2A to 2N, and output calculation results as the collection results to monitoring apparatus 100.

Monitoring apparatus 100 aggregates data transmitted from data collection devices 10A to 10N, and displays results based on the conditions of respective apparatuses 2A to 2N on a display device, as an example.

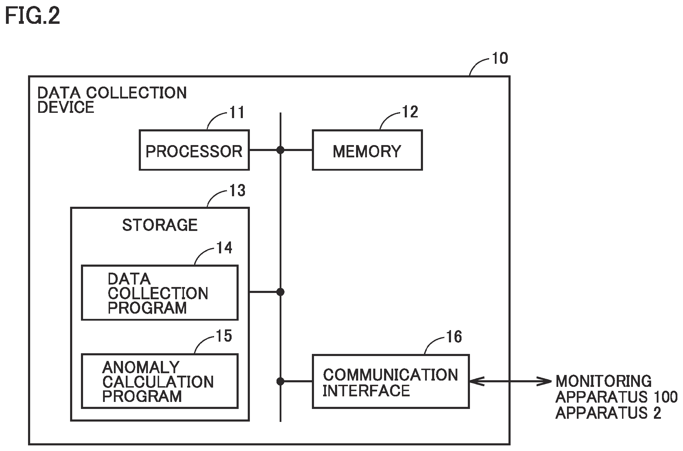

Fig. 2 is a diagram illustrating a configuration of a data collection device 10 according to Embodiment 1. Referring to Fig. 2, data collection device 10, typically, has a structure according to a general-purpose computer architecture. Specifically, data collection device 10 includes a processor 11 such as a central processing unit (CPU) and a micro-processing unit (MPU), a memory 12, a storage 13, and a communication interface 16, which are connected to one another via a bus so as to be capable of data communications. Processor 11 loads various programs stored in storage 13 for execution on memory 12, thereby implementing various processes according to the present embodiment. Memory 12 is, typically, a volatile storage device such as a dynamic random access memory (DRAM), and stores a program read from storage 13, for example. Storage 13 is, typically, a nonvolatile magnetic storage device such as a hard disk drive. Storage 13 stores a data collection program 14 and an anomaly calculation program 15 executed by processor 11. Various programs installed in storage 13 are distributed in a memory card, for example. Communication interface 16 mediates data transmission between processor 11 and external devices (e.g., apparatus 2A and monitoring apparatus 100). Communication interface 16, typically, includes Ethernet (registered trademark), universal serial bus (USB), etc. Note that various programs stored in storage 13 may be downloaded from, for example, a distribution server (not shown) via communication interface 16.

When using a computer having a structure according to the general-purpose computer architecture as described above, an operating system (OS) for providing basic functions of the computer may be installed, in addition to applications for providing functions according to the present embodiment. In this case, the program according to the present embodiment may be one that calls required modules in a predetermined order and timing, among program modules provided as a part of the OS, to perform processes. In other words, the program according to the present embodiment itself does not include the modules as described above, and may perform processes in cooperation with the OS. Note that, alternatively, some or all of the functions provided by execution of data collection program 14 and anomaly calculation program 15 may be implemented as a dedicated hardware circuit.

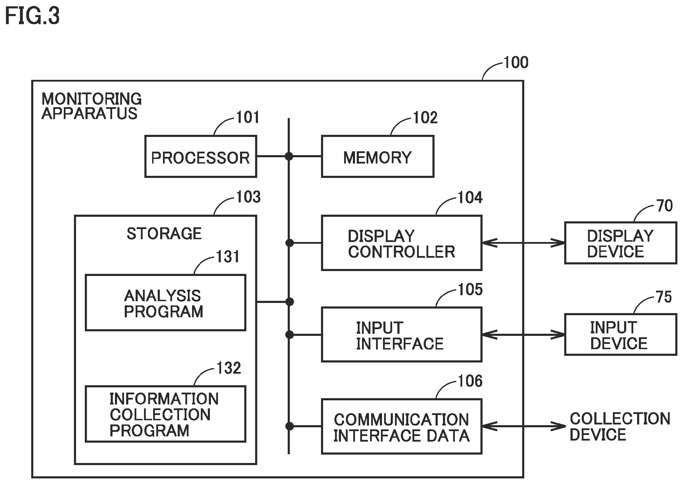

Fig. 3 is a diagram illustrating a configuration of a monitoring apparatus 100 according to Embodiment 1. Referring to Fig. 3, monitoring apparatus 100, typically, has a structure according to a general-purpose computer architecture. Specifically, monitoring apparatus 100 includes a processor 101 such as a central processing unit (CPU) and a micro-processing unit (MPU), a memory 102, a storage 103, a display controller 104, an input interface 105, and a communication interface 106, which are connected to each other via a bus so as to be capable of data communication. Processor 101 loads various programs stored in storage 103 for execution on memory 102, thereby implementing various processes according to the present embodiment. Memory 102 is, typically, a volatile storage device such as a dynamic random access memory (DRAM), and stores a program read from storage 103, for example. Storage 103 is, typically, a nonvolatile magnetic storage device such as a hard disk drive. Storage 103 stores an analysis program 131 and an information collection program 132 executed by processor 101. Various programs installed in storage 103 are distributed in a memory card, for example. Display controller 104 is connected to a display device 70, and outputs a signal for displaying various pieces of information to display device 70 according to an internal command from processor 101. Input interface 105 mediates data transmission between processor 101 and an input device 75 such as a keyboard, a mouse, a touch panel, and a dedicated console. In other words, input interface 105 receives an operation command given by a user operating input device 75. Communication interface 106 mediates data transmission between processor 101 and external devices (e.g., data collection device 10). Communication interface 106, typically, includes Ethernet (registered trademark), universal serial bus (USB), etc. Note that various programs stored in storage 103 may be downloaded from, for example, a distribution server (not shown) via communication interface 106.

When using a computer having a structure according to the general-purpose computer architecture as described above, an operating system (OS) for providing basic functions of the computer may be installed, in addition to applications for providing functions according to the present embodiment. In this case, the program according to the present embodiment may be one that calls required modules in a predetermined order and timing, among program modules provided as a part of the OS, to perform processes. In other words, the program according to the present embodiment itself does not include the modules as described above, and may perform processes in cooperation with the OS. Note that, alternatively, some or all of the functions provided by execution of analysis program 131 and information collection program 132 may be implemented as a dedicated hardware circuit.

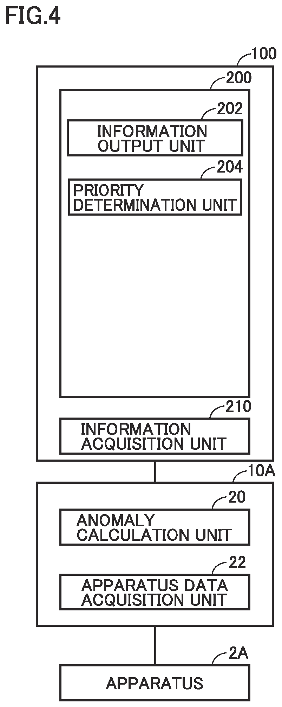

Fig. 4 is a diagram illustrating functional blocks of the monitoring system according to Embodiment 1. Referring to Fig. 4, data collection device 10A, connected to apparatus 2A, includes an anomaly calculation unit 20 and an apparatus data acquisition unit 22. Apparatus data acquisition unit 22 is implemented by processor 11 executing data collection program 14. Anomaly calculation unit 20 is implemented by processor 11 executing anomaly calculation program 15.

Apparatus data acquisition unit 22 acquires condition data based on a condition of apparatus 2A. Anomaly calculation unit 20 calculates an anomaly based on the condition data acquired by apparatus data acquisition unit 22. Calculation of the anomaly will be described later. The anomaly calculated by anomaly calculation unit 20 is transmitted to monitoring apparatus 100 via communication interface 16.

Monitoring apparatus 100 includes an analysis unit 200 and an information acquisition unit 210. Analysis unit 200 is implemented by processor 11 executing analysis program 131. Information acquisition unit 210 is implemented by processor 11 executing information collection program 132.

Information acquisition unit 210 acquires data transmitted from data collection devices 10A to 10N, respectively. Analysis unit 200 performs an analysis process on the data transmitted from data collection devices 10A to 10N acquired by information acquisition unit 210. Analysis unit 200 includes an information output unit 202 and a priority determination unit 204. Information output unit 202, for example, outputs various pieces of information via display controller 104 so as to be displayed on display device 70. Priority determination unit 204 determines priority for apparatuses 2A to 2N, based on anomalies calculated by anomaly calculation units 20 of data collection devices 10A to 10N. Data collection devices 10A to 10N transmit information regarding apparatuses 2A to 2N (such as apparatus name, date and time information) to monitoring apparatus 100, together with the anomalies. Monitoring system 1 calculates anomalies of apparatuses 2A to 2N, transmits the anomalies to monitoring apparatus 100, and centrally monitors apparatuses 2A to 2N according to the anomalies, thereby efficiently monitoring the conditions of the multiple apparatuses.

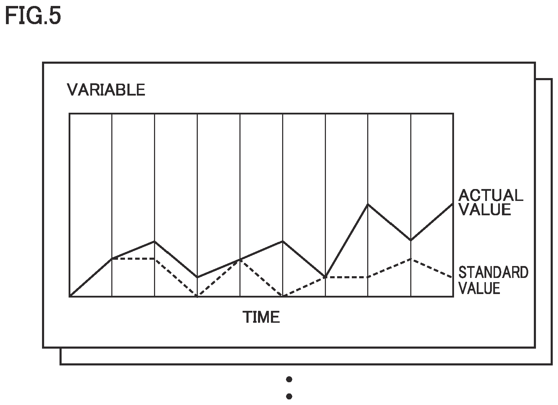

Fig. 5 is a diagram illustrating condition data acquired by apparatus data acquisition unit 22 according to Embodiment 1. Referring to Fig. 5, in this example, apparatus data acquisition unit 22 acquires data of multiple variables (parameters) as the condition data from apparatus 2A. Specifically, apparatus data acquisition unit 22 acquires an actual value for each unit time. Apparatus data acquisition unit 22 also acquires a standard value for each unit time. For example, if apparatus 2A is an injection molding machine, apparatus data acquisition unit 22 acquires data such as a heater temperature, an injection pressure, a resin pressure, a pump pressure, and a mold temperature as the condition data. Anomaly calculation unit 20 calculates a degree of divergence between the actual value and the standard value as an anomaly. For example, the standard value for each unit time may be acquired by simulating values of multiple variables when the injection molding machine is operated according to a production plan, using a virtual model of the injection molding machine, and acquiring values of multiple variables in the injection molding operation obtained by the simulation as the standard values.

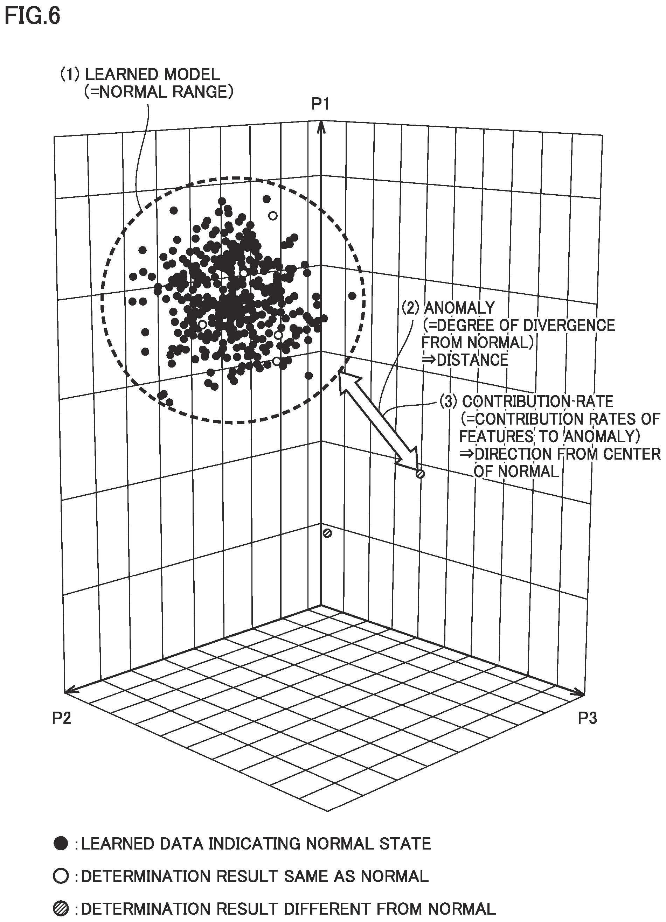

Fig. 6 is a diagram illustrating a calculation process of anomaly calculation unit 20 according to Embodiment 1. Referring to Fig. 6, in this example, data of three variables P1 to P3 are now described as an example. For variables P1 to P3, a three-axis three-dimensional space is set, and a data group indicating a normal range and data indicating an anomaly state are shown as a learned model. Black dot group data indicates the data group indicating the normal range. The data group indicating the normal range is composed of standard values. Hatched data, on the other hand, points to data separated from the normal range. A distance from a center point of a data group indicating the normal range is an anomaly. In other words, the greater the distance, the greater the value of the anomaly. While in this example, the three-dimensional space of three variables P1 to P3 is described, the space can, of course, be expand to a multi-dimensional space corresponding to the number of variables.

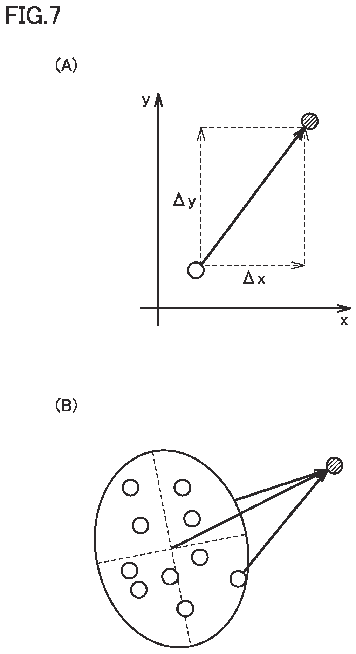

Fig. 7 is another diagram illustrating an anomaly in anomaly calculation unit 20 according to Embodiment 1. Referring to (A) of Fig. 7, data change from point to point is shown. In this example, a two-dimensional case is shown, showing a change by Δx with respect to an x-axis and by Δy with respect to a y-axis. In the two-dimensional case, a change in distance of Δx and Δy is calculated as an anomaly. Referring to (B) of Fig. 7, data change from a distribution to a point is shown. For a three-dimensional case, a change in distance from a center of the distribution to a point is calculated as an anomaly. While in this example, a change in distance is calculated as an anomaly by way of example, it should be noted that the present invention is not limited thereto. A speed of change in distance, that is, a magnitude of a change rate per unit time may be calculated as an anomaly. As an example of an algorithm for calculating the anomaly, an anomaly detection based on a Mahalanobis distance, or an anomaly detection algorithm such as LOF (Local Outlier Factor) or IsolationForest may be used.

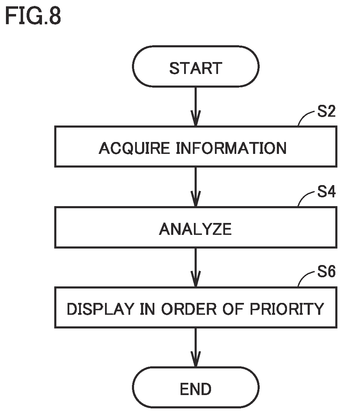

Fig. 8 is a diagram illustrating a process of monitoring apparatus 100 according to Embodiment 1. Referring to Fig. 8, monitoring apparatus 100 acquires information (step S2). Specifically, information acquisition unit 210 acquires data regarding apparatuses 2A to 2N collected by data collection devices 10A to 10N. Next, monitoring apparatus 100 performs an analysis process on the collected data (step S4). Specifically, analysis unit 200 performs the analysis process based on the acquired data. In this regard, priority determination unit 204 determines priority for multiple machines, based on anomalies calculated by anomaly calculation unit 20. Next, monitoring apparatus 100 displays the data of apparatuses 2A to 2N in order of priority, as an analysis result (step S6). Specifically, information output unit 202 displays information regarding multiple machines according to the determined priority. Then, the process ends (END).

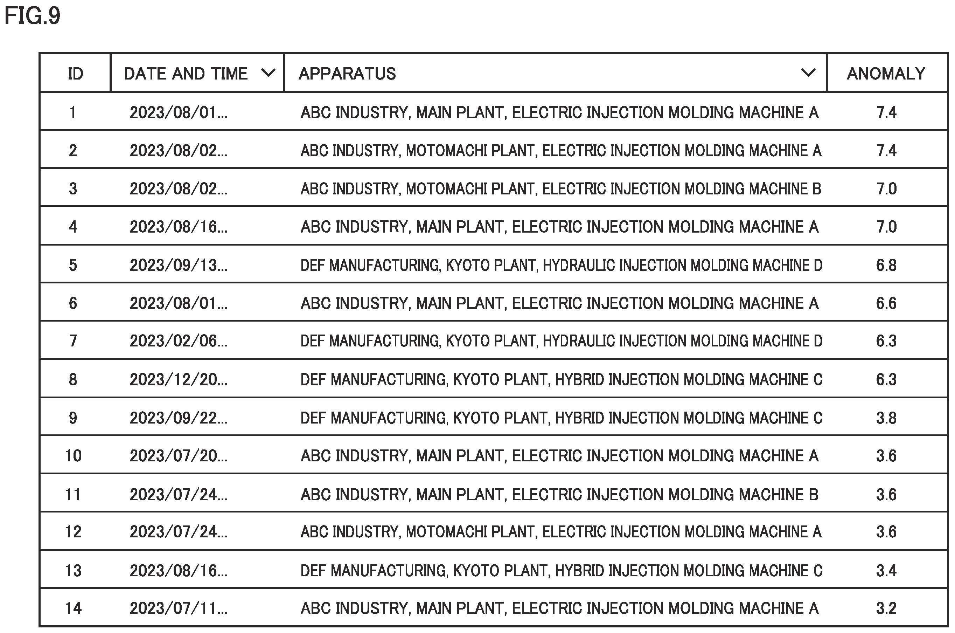

Fig. 9 is a diagram illustrating an example of a monitoring screen displayed on display device 70 according to Embodiment 1. Referring to Fig. 9, data regarding multiple apparatuses are displayed in a list. Specifically, data regarding apparatuses respectively assigned to identification numbers (IDs) 1 to 14 are displayed. As the data, a date and time when the data was acquired, apparatus information such as an apparatus name, and an anomaly are displayed in association with one another.

Corresponding to ID1, date and time information, an apparatus ("ABC Industry, Main Plant, Electric Injection Molding Machine A"), and an anomaly ("7.4") are displayed in association with one another. Corresponding to ID2, date and time information, an apparatus ("ABC Industry, Motomachi Plant, Electric Injection Molding Machine A"), and an anomaly ("7.4") are displayed in association with one another. Corresponding to ID3, date and time information, an apparatus ("ABC Industry, Motomachi Plant, Electric Injection Molding Machine B"), and an anomaly ("7.0") are displayed in association with one another. Corresponding to ID4, date and time information, an apparatus ("ABC Industry, Main Plant, Electric Injection Molding Machine A"), and an anomaly ("7.0") are displayed in association with one another. Corresponding to ID5, date and time information, an apparatus ("DEF Manufacturing, Kyoto Plant, Hydraulic Injection Molding Machine D"), and an anomaly ("6.8") are displayed in association with one another. Corresponding to ID6, date and time information, an apparatus ("ABC Industry, Main Plant, Electric Injection Molding Machine A"), and an anomaly ("6.6") are displayed in association with one another. Corresponding to ID7, date and time information, an apparatus ("DEF Manufacturing, Kyoto Plant, Hydraulic Injection Molding Machine D"), and an anomaly ("6.3") are displayed in association with one another. Corresponding to ID8, date and time information, an apparatus ("DEF Manufacturing, Kyoto Plant, Hybrid Injection Molding Machine C"), and an anomaly ("6.3") are displayed in association with one another. Corresponding to ID9, date and time information, an apparatus ("DEF Manufacturing, Kyoto Plant, Hybrid Injection Molding Machine C"), and an anomaly ("3.8") are displayed in association with one another. Corresponding to ID10, date and time information, an apparatus ("ABC Industry, Main Plant, Electric Injection Molding Machine A"), and an anomaly ("3.6") are displayed in association with one another. Corresponding to ID11, date and time information, an apparatus ("ABC Industry, Main Plant, Electric Injection Molding Machine A"), and an anomaly ("3.6") are displayed in association with one another. Corresponding to ID12, date and time information, an apparatus ("ABC Industry, Motomachi Plant, Electric Injection Molding Machine A"), and an anomaly ("3.6") are displayed in association with one another. Corresponding to ID13, date and time information, an apparatus ("DEF Manufacturing, Kyoto Plant, Hybrid Injection Molding Machine C"), and an anomaly ("3.4") are displayed in association with one another. Corresponding to ID14, date and time information, an apparatus ("ABC Industry, Main Plant, Electric Injection Molding Machine A"), and an anomaly ("3.2") are displayed in association with one another.

In this example, priority for various injection molding machines which are multiple machines is determined based on the calculated values of anomalies of the injection molding machines which are multiple machines, and the information regarding the injection molding machines are displayed according to the determined priority. Specifically, the information regarding the apparatuses is displayed in descending order of anomaly. This enables grasping at a glance of which machine has a large anomaly. This enables efficiently monitoring of the conditions of the multiple machines.

### (Embodiment 2)

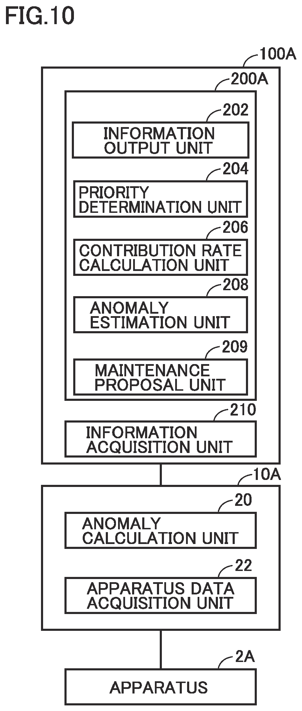

Fig. 10 is a diagram illustrating functional blocks of a monitoring system according to Embodiment 2. Referring to Fig. 10, the monitoring system according to Embodiment 2 differs from the monitoring system described with respect to Fig. 4 in that the monitoring apparatus 100 is replaced with a monitoring apparatus 100A. Monitoring apparatus 100A differs from monitoring apparatus 100 in that the analysis unit 200 is replaced with an analysis unit 200A. Analysis unit 200A further includes, as compared with analysis unit 200, a contribution rate calculation unit 206, an anomaly estimation unit 208, and a maintenance proposal unit 209. Contribution rate calculation unit 206 calculates contribution rates of multiple variables which are related to a factor of the anomaly. For example, contribution rate calculation unit 206 calculates the contribution rates of the multiple variables to an anomaly, based on the direction from the center of the data group indicating the normal range of data described with respect to Fig. 6. Anomaly estimation unit 208 estimates a cause of the anomaly, according to the calculated contribution rates of the multiple variables. Maintenance proposal unit 209 presents information regarding maintenance, according to the estimated cause of the anomaly.

For example, contribution rate calculation unit 206 may calculate the contribution rates of multiple variables which are related to the factor of the anomaly, with respect to the information regarding an injection molding machine having the highest priority. Alternatively, contribution rate calculation unit 206 may receive a selection input from a user and calculate the contribution rates of multiple variables related to the factor of the anomaly, with respect to the information regarding an injection molding machine corresponding to the received selection input.

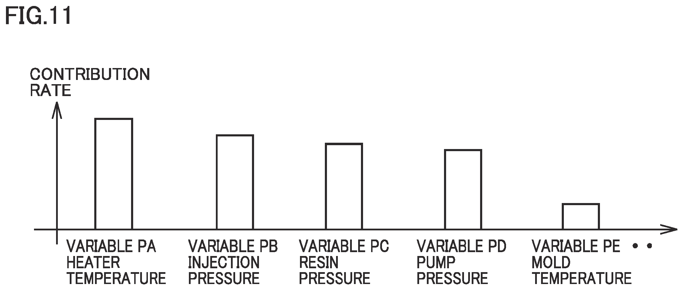

Fig. 11 is a diagram illustrating contribution rates of multiple variables calculated by contribution rate calculation unit 206 according to Embodiment 2. Referring to Fig. 11, in this example, multiple contribution rates to the anomaly which are related to the factor of the anomaly are shown. Specifically, as an example, contribution rates of multiple variables such as a variable PA (heater temperature), a variable PB (injection pressure), a variable PC (resin pressure), a variable PD (pump pressure), and a variable PE (mold temperature) are shown.

Anomaly estimation unit 208 estimates a cause of the anomaly, according to the calculated contribution rates of the variables. For example, as an example, anomaly estimation unit 208 extracts a variable whose value of the contribution rate is highest among the variables PA to PE. As an example, anomaly estimation unit 208 extracts variable PA (heater temperature). Anomaly estimation unit 208 estimates an anomaly, according to the extracted variable PA. Specifically, anomaly estimation unit 208 determines that the variable PA (heater temperature) has a strong causal relationship with the anomaly. In other words, anomaly estimation unit 208 estimates that the heater is the cause of the anomaly, based on variable PA. Maintenance proposal unit 209 presents maintenance-related information, according to the estimated cause of the anomaly.

For example, anomaly estimation unit 208 may estimate a cause of the anomaly, according to the calculated contribution rates of the multiple variables, with respect to the information regarding the injection molding machine having the highest priority. Alternatively, anomaly estimation unit 208 may receive a selection input from the user and estimate a cause of the anomaly according to the contribution rates of the multiple variables related to the factor of the calculated anomaly, with respect to the information regarding the injection molding machine corresponding to the received selection input.

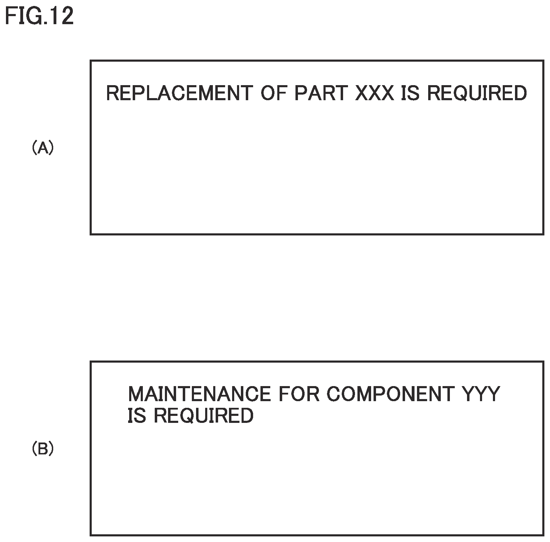

Fig. 12 is a diagram illustrating presentation of information regarding maintenance in maintenance proposal unit 209 according to Embodiment 2. Referring to (A) of Fig. 12, maintenance proposal unit 209 presents the information regarding maintenance together with a guide message stating, "Replacement of part XXX is required." Referring to (B) of Fig. 12, maintenance proposal unit 209 presents the information regarding maintenance together with a guide message stating, "Maintenance for part YYY is required." For example, when anomaly estimation unit 208 estimates that the heater is the cause of the anomaly, maintenance proposal unit 209 may present information regarding replacement of the heater, or may present information regarding maintenance of heater parts.

As described above, the monitoring system according to Embodiment 2 calculates contribution rates of multiple variables to the anomaly, thereby enabling easily grasping of a condition of a machine corresponding to the anomaly and efficient monitoring of the conditions of multiple machines. Moreover, the monitoring system according to Embodiment 2 calculates the contribution rates, thereby enabling estimating of a cause of the anomaly and efficient monitoring of the conditions of multiple machines.

### (Embodiment 3)

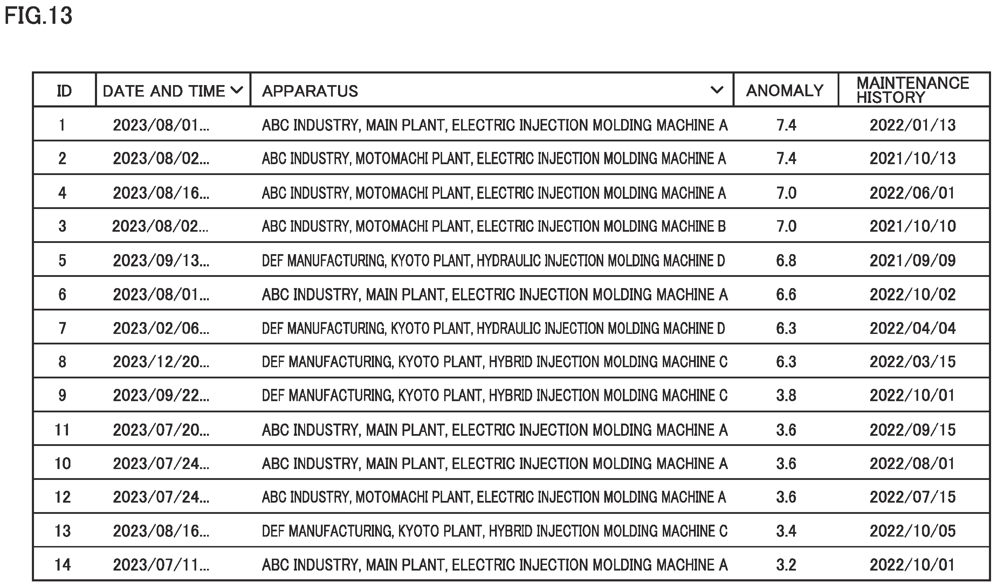

Fig. 13 is a diagram illustrating an example of a monitoring screen displayed on a display device 70 according to Embodiment 3. Referring to Fig. 13, data regarding multiple apparatuses are displayed in a list. Specifically, data regarding apparatuses respectively assigned to IDs 1 to 14 are displayed. As the data, a date and time when the data was acquired, apparatus information, an anomaly, and a maintenance history are displayed in association with one another. The maintenance history is history data of previous maintenance. The maintenance history may be information entered by an administrator who manages monitoring apparatus 100, or may be information transmitted from data collection device 10A as information registered in data collection device 10A.

In this example, priority determination unit 204 determines priority for multiple machines based on the calculated anomalies and maintenance-related information respectively corresponding to the machines. For example, the maintenance-related information may include at least one information among a maintenance history, maintenance personnel, availability information for maintenance parts, and a maintenance area.

Specifically, corresponding to ID1, date and time information, an apparatus ("ABC Industry, Main Plant, Electric Injection Molding Machine A"), an anomaly ("7.4"), and a maintenance history are displayed in association with one another. Corresponding to ID2, date and time information, an apparatus ("ABC Industry, Motomachi Plant, Electric Injection Molding Machine A"), an anomaly ("7.4"), and a maintenance history are displayed in association with one another. Corresponding to ID3, date and time information, an apparatus ("ABC Industry, Motomachi Plant, Electric Injection Molding Machine B"), an anomaly ("7.0"), and a maintenance history are displayed in association with one another. Corresponding to ID4, date and time information, an apparatus ("ABC Industry, Main Plant, Electric Injection Molding Machine A"), an anomaly ("7.0"), and a maintenance history are displayed in association with one another. Corresponding to ID5, date and time information, an apparatus ("DEF Manufacturing, Kyoto Plant, Hydraulic Injection Molding Machine D"), an anomaly ("6.8"), and a maintenance history are displayed in association with one another. Corresponding to ID6, date and time information, an apparatus ("ABC Industry, Main Plant, Electric Injection Molding Machine A"), an anomaly ("6.6"), and a maintenance history are displayed in association with one another. Corresponding to ID7, date and time information, an apparatus ("DEF Manufacturing, Kyoto Plant, Hydraulic Injection Molding Machine D"), an anomaly ("6.3"), and a maintenance history are displayed in association with one another. Corresponding to ID8, date and time information, an apparatus ("DEF Manufacturing, Kyoto Plant, Hybrid Injection Molding Machine C"), an anomaly ("6.3"), and a maintenance history are displayed in association with one another. Corresponding to ID9, date and time information, an apparatus ("DEF Manufacturing, Kyoto Plant, Hybrid Injection Molding Machine C"), an anomaly ("3.8"), and a maintenance history are displayed in association with one another. Corresponding to ID10, date and time information, an apparatus ("ABC Industry, Main Plant, Electric Injection Molding Machine A"), an anomaly ("3.6"), and a maintenance history are displayed in association with one another. Corresponding to ID11, date and time information, an apparatus ("ABC Industry, Main Plant, Electric Injection Molding Machine A"), an anomaly ("3.6"), and a maintenance history are displayed in association with one another. Corresponding to ID12, date and time information, an apparatus ("ABC Industry, Motomachi Plant, Electric Injection Molding Machine B"), an anomaly ("3.6"), and a maintenance history are displayed in association with one another. Corresponding to ID13, date and time information, an apparatus ("DEF Manufacturing, Kyoto Plant, Hybrid Injection Molding Machine C"), an anomaly ("3.4"), and a maintenance history are displayed in association with one another. Corresponding to ID14, date and time information, an apparatus ("ABC Industry, Main Plant, Electric Injection Molding Machine A"), an anomaly ("3.2"), and a maintenance history are displayed in association with one another.

In this example, priority for various injection molding machines which are multiple machines is determined based on the calculated values of anomalies of the injection molding machines which are multiple machines, and the maintenance histories and information regarding the injection molding machines are displayed according to the determined priority. Specifically, information regarding the apparatuses is displayed in order of anomaly and in order of priority of maintenance history date. For example, when anomalies have the same value, data with a more recent maintenance history date is determined to have higher priority. For example, as compared with the data of Fig. 9, the data of ID4 whose maintenance history date is more recent than ID3 is determined to have higher priority. Similarly, the data of ID11 with a more recent maintenance history date is determined to have higher priority than the rank of the data of ID10. This enables grasping at a glance of which machine has a large anomaly. This enables efficiently monitoring of the conditions of the multiple machines.

In this example, priority determination unit 204 determines priority by using the maintenance histories as maintenance-related information respectively corresponding to the calculated anomalies and the multiple machines. However, the present invention is not limited thereto. For example, information on maintenance personnel may be used. For example, when priority is provided for maintenance personnel and anomalies have the same value, data associated with maintenance personnel with higher priority may be determined to have a higher rank. Alternatively, availability information for maintenance parts may be used. For example, when information on presence or absence of parts is previously registered as the availability information for maintenance parts and anomalies have the same value, data associated with the presence of maintenance parts may be determined to have a higher rank. Alternatively, information on a maintenance area may be used. For example, when priority is provided for the maintenance area and anomalies have the same value, data associated with the maintenance area with higher priority may be determined to have a higher rank. This enables grasping at a glance of which machine has a high anomaly in consideration of the maintenance-related information. This enables efficient monitoring of the conditions of multiple machines.

### (Embodiment 4)

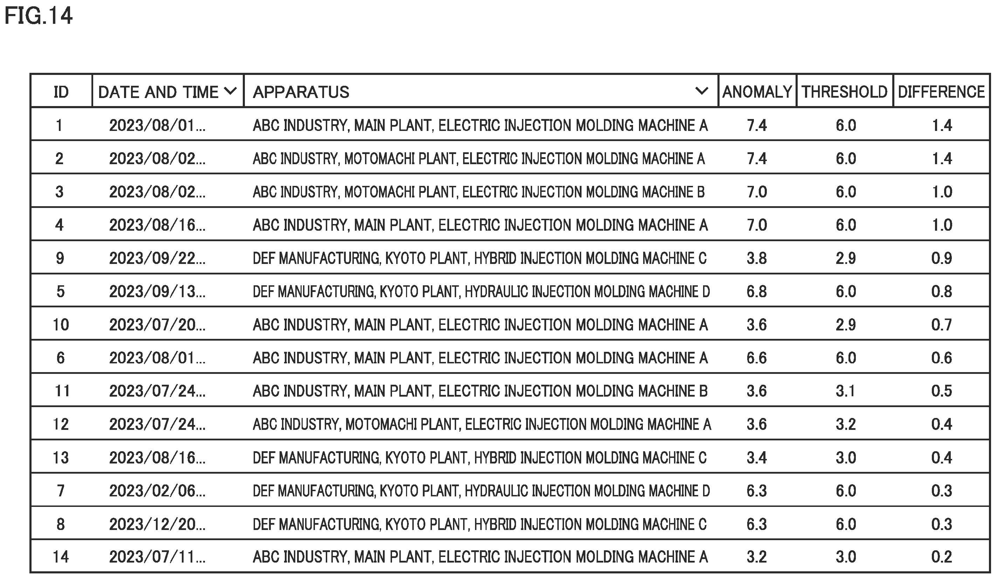

Fig. 14 is a diagram illustrating an example of a monitoring screen displayed on a display device 70 according to Embodiment 4. Referring to Fig. 14, data regarding multiple apparatuses are displayed in a list. Specifically, data regarding apparatuses respectively assigned to IDs 1 to 14 are displayed. As the data, a date and time when the data was acquired, apparatus information, an anomaly, a threshold, and a difference are displayed in association with one another. In this example, a priority determination unit 204 calculates a difference value between the calculated anomaly and the reference threshold, and determines priority for multiple machines based on the calculated difference value. For example, in this example, the priority is determined in descending order of difference value from the threshold.

Specifically, corresponding to ID1, date and time information, an apparatus ("ABC Industry, Main Plant, Electric Injection Molding Machine A"), an anomaly ("7.4"), a threshold ("6.0"), and a difference ("1.4") are displayed in association with one another. Corresponding to ID2, date and time information, an apparatus ("ABC Industry, Motomachi Plant, Electric Injection Molding Machine A"), an anomaly ("7.4"), a threshold ("6.0"), and a difference ("1.4") are displayed in association with one another. Corresponding to ID3, date and time information, an apparatus ("ABC Industry, Motomachi Plant, Electric Injection Molding Machine B"), an anomaly ("7.0"), a threshold ("6.0"), and a difference (" 1.0") are displayed in association with one another. Corresponding to ID4, date and time information, an apparatus ("ABC Industry, Main Plant, Electric Injection Molding Machine A"), an anomaly ("7.0"), a threshold ("6.0"), and a difference (" 1.0") are displayed in association with one another. Corresponding to ID9, date and time information, an apparatus ("DEF Manufacturing, Kyoto Plant, Hybrid Injection Molding Machine C"), an anomaly ("3.8"), a threshold ("2.9"), and a difference ("0.9") are displayed in association with one another. Corresponding to ID5, date and time information, an apparatus ("DEF Manufacturing, Kyoto Plant, Hydraulic Injection Molding Machine D"), an anomaly ("6.8"), a threshold ("6.0"), and a difference ("0.8") are displayed in association with one another. Corresponding to ID10, date and time information, an apparatus ("ABC Industry, Main Plant, Electric Injection Molding Machine A"), an anomaly ("3.6"), a threshold ("2.9"), and a difference ("0.7") are displayed in association with one another. Corresponding to ID6, date and time information, an apparatus ("ABC Industry, Main Plant, Electric Injection Molding Machine A"), an anomaly ("6.6"), a threshold ("6.0"), and a difference ("0.6") are displayed in association with one another. Corresponding to ID11, date and time information, an apparatus ("ABC Industry, Main Plant, Electric Injection Molding Machine B"), an anomaly ("3.6"), a threshold ("3.1"), and a difference ("0.5") are displayed in association with one another. Corresponding to ID12, date and time information, an apparatus ("ABC Industry, Motomachi Plant, Electric Injection Molding Machine A"), an anomaly ("3.6"), a threshold ("3.2"), and a difference ("0.4") are displayed in association with one another. Corresponding to ID13, date and time information, an apparatus ("DEF Manufacturing, Kyoto Plant, Hybrid Injection Molding Machine C"), an anomaly ("3.4"), a threshold ("3.0"), and a difference ("0.4") are displayed in association with one another. Corresponding to ID7, date and time information, an apparatus ("DEF Manufacturing, Kyoto Plant, Hydraulic Injection Molding Machine D"), an anomaly ("6.3"), a threshold ("6.0"), and a difference ("0.3") are displayed in association with one another. Corresponding to ID8, date and time information, an apparatus ("DEF Manufacturing, Kyoto Plant, Hybrid Injection Molding Machine C"), an anomaly ("6.3"), a threshold ("6.0"), and a difference ("0.3") are displayed in association with one another. Corresponding to ID14, date and time information, an apparatus ("ABC Industry, Main Plant, Electric Injection Molding Machine A"), an anomaly ("3.2"), a threshold ("3.0"), and a difference ("0.2") are displayed in association with one another.

In this example, priority for various injection molding machines which are multiple machines is determined based on the difference values between the calculated anomalies and the thresholds of the injection molding machines which are multiple machines, and the information regarding the injection molding machines are displayed according to the determined priority. Specifically, the information regarding the apparatuses is displayed in descending order of a difference value between an anomaly and a threshold. This enables grasping at a glance of which machine has a high anomaly based on the difference value between the anomaly and the threshold. This enables efficient monitoring of the conditions of multiple machines. Note that, in this example, the threshold may be provided so as to be variable by a user, an administrator, etc. In other words, setting of the threshold may be changeable for each machine. This enables efficient monitoring of the conditions of multiple machines by setting the threshold according to the condition of each machine.

Moreover, while in this example, a method of grasping at a glance of which machine has a high anomaly based on the difference value between the anomaly and the threshold has been described, the present invention is not limited thereto. For example, speed information in which an anomaly is about to reach a threshold may be used. Specifically, date information when the anomaly reaches the threshold may be estimated to determine priority for the injection molding machines provided as multiple machines based on the earliest date information, and display information regarding the injection molding machines according to the determined priority. This enables efficient monitoring of the conditions of multiple machines.

In the configuration of the monitoring system described above, the configuration has been described in which data collection devices 10A to 10N and monitoring apparatus 100 are separately provided. However, the present invention is not limited thereto. Monitoring apparatus 100 and data collection devices 10A to 10N can be combined into one apparatus. Further, some of the functions of data collection device 10, for example, the function of the anomaly calculation unit, may be provided in monitoring apparatus 100.

While the embodiments according to the present disclosure have been described above, the presently disclosed embodiments should be considered in all aspects illustrative and not restrictive. The scope of the present disclosure is defined by the appended claims. All changes which come within the meaning and range of equivalency of the appended claims are to be embraced within their scope.

### REFERENCE SIGNS LIST

1 monitoring system; 2A to 2N apparatus; 10A to 10N data collection device; 11, 101 processor; 12, 102 memory; 13, 103 storage; 14 data collection program; 15 anomaly calculation program; 16, 106 communication interface; 20 anomaly calculation unit; 22 apparatus data acquisition unit; 70 display device; 75 input device; 100, 100A monitoring apparatus; 104 display controller; 105 input interface; 131 analysis program; 132 information collection program; 200, 200A analysis unit; 202 information output unit; 204 priority determination unit; 206 contribution rate calculation unit; 208 anomaly estimation unit; 209 maintenance proposal unit; and 210 information acquisition unit.

## Claims

1. A monitoring apparatus comprising:
an anomaly calculation unit configured to calculate an anomaly based on condition data of each machine of a plurality of machines;
a priority determination unit configured to determine priority for the plurality of machines based on the anomaly calculated by the anomaly calculation unit; and
a display control unit configured to display information regarding the plurality of machines according to the priority determined by the priority determination unit.

2. The monitoring apparatus according to claim 1, wherein
the condition data includes a plurality of pieces of variable data, and
the anomaly calculation unit calculates an anomaly based on a Mahalanobis distance of the plurality of pieces of variable data.

3. The monitoring apparatus according to claim 2, further comprising:
a contribution rate calculation unit configured to calculate a contribution rate of each variable data to the anomaly; and
an anomaly estimation unit configured to estimate an anomaly according to the calculated contribution rate.

4. The monitoring apparatus according to claim 3, further comprising a maintenance proposal unit configured to guide information regarding maintenance according to the estimated anomaly.

5. The monitoring apparatus according to claim 1, wherein
the priority determination unit determines the priority for the plurality of machines based on the calculated anomaly and maintenance-related information respectively corresponding to the plurality of machines.

6. The monitoring apparatus according to claim 5, wherein
the maintenance-related information includes at least one information among a maintenance history, maintenance personnel, availability information for maintenance parts, and a maintenance area.

7. The monitoring apparatus according to claim 1, wherein
the priority determination unit calculates a difference value between the anomaly and a reference threshold, and determines the priority for the plurality of machines based on the calculated difference value.

8. The monitoring apparatus according to claim 7, wherein
the reference threshold is settable and changeable corresponding to each machine of the plurality of machines.

9. A monitoring method comprising
a step of calculating an anomaly based on condition data of each machine of a plurality of machines;
a step of determining priority for the plurality of machines based on the calculated anomaly; and
a step of displaying information regarding the plurality of machines according to the determined priority.

10. A monitoring program for causing a computer to execute a monitoring method, the program causing the computer to execute:
a step of calculating an anomaly based on condition data of each machine of a plurality of machines;
a step of determining priority for the plurality of machines based on the calculated anomaly; and
a step of displaying information regarding the plurality of machines according to the determined priority.
